**Europäisches Patentamt**

**European Patent Office**

**Office européen des brevets**

(11) Publication number: **0 107 393**
**B1**

(12) **EUROPEAN PATENT SPECIFICATION**

(45) Date of publication of patent specification: **01.03.89**

(21) Application number: **83305873.8**

(22) Date of filing: **29.09.83**

(51) Int. Cl.⁴: **G 06 F 15/60, H 01 L 27/02**

(54) **Method of manufacturing master-slice integrated circuit device.**

(30) Priority: **30.09.82 JP 172167/82**

(43) Date of publication of application:
**02.05.84 Bulletin 84/18**

(45) Publication of the grant of the patent:
**01.03.89 Bulletin 89/09**

(84) Designated Contracting States:
**DE FR GB**

(56) References cited:
EP-A-0 005 723
EP-A-0 021 661
DE-A-2 442 850

JOURNAL OF DIGITAL SYSTEMS, vol. 4, no. 4, 1980, Rockville, USA H. KANADA et al. "Channel-order router - A new routing technique for a masterslice LSI", pages 427-441

COMPUTER DESIGN, vol. 21, no. 5, May 1982 W. LOESCH "Custom ICS from standard cells: a design approach", pages 227-234

"VLSI System Design" by Muroga 1982, pages 365-393

(73) Proprietor: **FUJITSU LIMITED**
**1015, Kamikodanaka Nakahara-ku**
**Kawasaki-shi Kanagawa 211 (JP)**

(72) Inventor: **Aihara, Satoshi**
**1-17-15, Kamiyabe**
**Sagamihara-shi Kanagawa 229 (JP)**
Inventor: **Tanizawa, Tetsu**
**301. 1-7-1, Hosoyama Aso-ku**
**Kawasaki-shi Kanagawa 215 (JP)**

(74) Representative: **Sunderland, James Harry et al**
**HASELTINE LAKE & CO Hazlitt House 28**
**Southampton Buildings Chancery Lane**
**London WC2A 1AT (GB)**

(56) References cited:
ELECTRONIC DESIGN, vol. 29, no. 26, 24 December 1981, Waseca, USA "Software logic cels - fast, low-cost solutuion for custom LSI", pages 119-124

ELECTRICAL DESIGN NEWS, vol. 27, no. 15, 4 August 1982, Boston, USA A. RAPPAPORT "Automated design and simulation aids speed semicustom-IC development", pages 35-48

Courier Press, Leamington Spa, England.

(56) References cited:
**INTERNATIONAL ELECTRONICS, vol. 54, no. 18, 8 September 1981, New York, USA W.R. BLOOD "CAD toolbox holds all gear for the design of custom logic arrays", pages 140-142**
**COMPUTER, vol. 14, no. 7, July 1981, Long Beach, USA T.C. RAYMOND "LSI/VLSI design automation" pages 89-101**

# Description

The present invention relates to a method of manufacturing a master-slice integrated circuit device.

The mask patterns for a gate-array LSI device are made from a logic circuit designed by the customer using basic logic blocks such as basic cells in a logic block family consisting of various gate circuits, and the like. Information on the logic block family is supplied to the customer by the LSI manufacturer. In certain cases, such as when many different kinds of gate array LSIs are manufactured, circuits with structures partially common to each other are often used. In such cases, it is generally possible to define a common portion that includes a plurality of basic logic blocks constituting a logic block such as, for example, a macro cell, to simplify the design work.

In conventional methods for manufacturing masterslice integrated circuit devices, since it is impossible to use only part of the basic logic blocks constituting a logic block, it has been necessary to define different logic blocks even for circuits which differ only slightly from each other. For example, when it is necessary to use counter circuits having different bit numbers, such as two-bit counters, three-bit counters, four-bit counters, and so on, logic blocks have to be defined for each type of counter. In such a method, therefore, the number of kinds of logic blocks becomes relatively large. Because many libraries of these logic blocks must be registered in a computer used in the design process, the memory capacity of the computer has to be enlarged, the processing time for computational processes in design automation (DA) extended, and the memory capacity of the working areas enlarged. Moreover, artificial errors increase when the libraries of the logic blocks are registered in the computer, and so the reliability of the gate array LSIs deteriorates.

An article in E.D.N. Electrical Design News Vol. 27 (1982) Aug., No. 15, pages 35 to 48, entitled "Automated design and simulation aids speed semicustom IC development", surveys design automation systems for use in semicustom-IC development. This article describes a Texas Instruments gate-array design system having a library of 75 SSI and MSI TTL-equivalent function definitions (or macros), consisting of gates and inverters. The function definitions can be altered: interconnection data can be edited to add or delete gates or reroute connections within a function, and an optimization program is available to delete unneeded gates and multiple-inverter chains.

The article also describes VLSI Logic's LDS-1 gate array design system, which has a function library containing patterns (function definitions) emulating all 7400 Series TTL and 4000 Series CMOS circuits. MSI-equivalent functions are formed by linking smaller functions. An optimization program called Gate-Gobbler acts similarly to the optimization program of the Texas Instruments system, to remove unnecessary circuit elements. The stated purpose of both optimization programs is to improve gate utilization, rather than to reduce the size of the function library. Indeed, the function library of the LDS-1 system, in order to emulate all 7400 and 4000 series circuits, will always be large in size. There is no disclosure that the optimization programs are applied repeatedly to eliminate all unused circuit elements in a design. Moreover there is no disclosure of any criterion by which either optimization program effects deletion of unused elements.

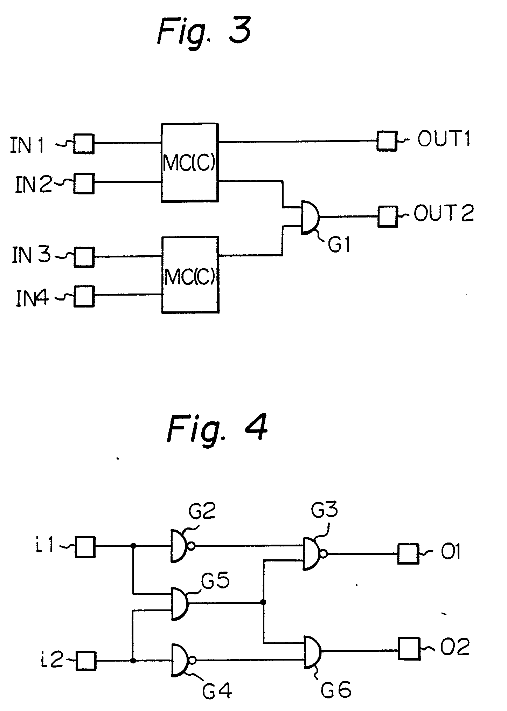

An article in Computer Vol. 41, July 1981 No. 7, pages 89 to 101, entitled "LSI/VLSI Design Automation", examines LSI/VLSI design automation systems. It discloses that design data entered to suchasystem consists of an interconnected set of logical elements, which elements can range in complexity from device level, through "macro" level to a full ALU or microprocessor. These elements may be arranged in a hierarchy, as shown in Figure 4 of the article. It is pointed out that the trend in LSI/VLSI design is for the designer to begin at the macro or high level rather than the primative level, with a computer being used if required to expand high-level elements into primitives. This article has no disclosure relevant to decreasing the size of libraries used in design automation.

"VLSI System Design" by Muròga, 1982, pages 389 and 390, explains the problems with existing cell libraries in semicustom IC design. It discloses that cell libraries must be updated frequently to keep up with technological progress, and that unless a number of designers use it, it may not be economically justifiable to have an extensive, up-to-date library.

According to the present invention, there is provided a method of manufacturing a master-slice integrated circuit device whereby a logic block including a plurality of basic logic blocks is registered in a library in a memory, a total circuit diagram is made by using at least one logic block, each of said logic blocks included in said total circuit diagram is developed by a process of hierarchical development into a plurality of basic logic blocks, then said total circuit diagram is reformed by deleting basic logic blocks whose output terminals are not used among said basic logic blocks in each of said logic blocks, deleting unused wiring and other unused basic logic blocks whose output terminals are not connected to any basic logic blocks as a result of the deletion of said basic logic blocks, and sequentially deleting unused basic logic blocks and unused wiring in the same manner, thereby retaining only those basic logic blocks that are actually used as effective basic logic blocks, the circuit patterns of said master slice integrated circuit device being produced by using the total circuit diagram thus reformed.

The present invention provides a method of designing circuit patterns, i.e., the mask patterns for master-slice integrated circuit device such as a gate array LSI device, from a block circuit diagram designed by using logic blocks, each of which includes a plurality of basic logic blocks.

The present invention adopts the partial use of logic blocks, in a method of manufacturing a master-slice integrated circuit device for designing circuit patterns.

An embodiment of the present invention can greatly decrease the number of logic blocks in a logic block family so as to make less demand on the memory capacity of the computer, and decrease the processing time.

An embodiment of the present invention can also decrease the time required for registering the logic block libraries in the computer, thereby reducing the deterioration in reliability of an IC device.

Reference is made, by way of example, to the accompanying drawings in which:

Figure 1 is a diagram showing a block circuit diagram used for implementing a conventional method;

Figs. 2A and 2B are internal circuit diagrams each showing the structure of a logic block used in the circuit of Fig. 1;

Fig. 3 shows a block circuit diagram used for implementing a method according to the present invention;

Fig. 4 is an inner circuit diagram showing a structure of a logic block used in the block circuit diagram of Fig. 3;

Fig. 5 is a flow chart showing a process for implementing a method according to the present invention;

Fig. 6 shows another block circuit diagram used for implementing a method according to the present invention;

Fig. 7 is an inner circuit diagram showing the structure of a logic block used in the block circuit diagram of Fig. 6;

Fig. 8 shows a block circuit is obtained by hierarchial development in a method according to the present invention;

Fig. 9 shows a block circuit obtained after the deletion of unused basic logic blocks; and

Figs. 10A and 10B show inner circuits of other logic blocks used for implementing a method according to the present invention.

Before describing embodiments of the present invention, a conventional method is explained with reference to the drawings.

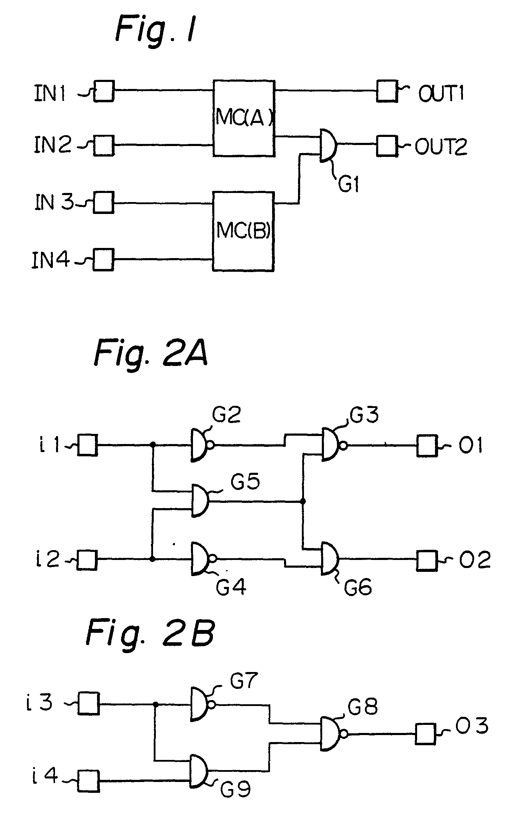

Figure 1 illustrates a block circuit diagram formed using logic blocks and designed by a conventional method. In Fig. 1, IN1 to IN4 designate input terminals, OUT1 and OUT2 designate output terminals, MC(A) and MC(B) are logic blocks, and G1 is an AND gate. In a block circuit diagram of Fig. 1, logic blocks MC(A) and MC(B) have the structures shown in Figs. 2A and 2B, respectively. As illustrated in Fig. 2A, the logic block MC(A) consists of, for example, three NAND gates G2, G3, G4, and two AND gates G5 and G6. Reference codes i1 and i2 are input terminals of the logic block, and 01 and 02 are output terminals of the logic block. As illustrated in Fig. 2B, the logic block MC(B) of Fig. 1 consists of an inverting gate G7, a NAND gate G8, and an AND gate G9. In Fig. 2B, i3 and i4 designate input terminals of the logic block, and 03 designates an output terminal of the logic block, in a manner similar to Fig. 2A. By defining the logic blocks as illustrated in Figs. 2A and 2B, it is possible for customers to design logic circuits as block circuits like that shown in Fig. 1, when many kinds of gate array LSIs are being designed. It is therefore not necessary to develop a circuit diagram to the basic logic block level, thus simplifying the design work and reducing errors in the design. Logic blocks are useful not only when many kinds of LSIs are being designed but also when an LSI whose circuit comprises a plurality of partially common circuit portions is designed. Each common part of the circuit portions can be designed as a single logic block, again simplifying the design work.

However, the conventional method has the aforementioned drawbacks.

Embodiments of the present invention will now be described with reference to the drawings. Figure 3 shows an example of a block circuit diagram used when one embodiment of the method of the present invention is carried out. In Fig. 3, IN1 to IN4 designate input terminals, OUT1 and OUT2 are output terminals, G1 is an AND gate, and MC(C) is a logic block.

In the block circuit diagram of Fig. 3, the same two logic blocks MC(C) are used to constitute the circuit diagram. The logic block MC(C) has the structure shown in Fig. 4, which is the same as that shown in Fig. 2A. The logic circuit represented by the block circuit diagram of Fig. 3 is thus quite similar to the logic circuit represented by the block circuit diagram of Fig. 1. However, it should be noted that, in the block circuit diagram of Fig. 3, the logic circuit is represented by using only one kind of logic block MC(C). In the block circuit diagram of Fig. 3, only one of the output terminals 01 is used; the other output terminal 02 is not used in the macro cell MC(C) connected to input terminals IN3 and IN4.

In the method according to the present invention, gate G6 connected to unused output terminal 02 is deleted, and, gate G4, whose output terminal becomes unused by the deletion of gate G6, is deleted. The present invention makes it possible to partially utilize each logic block by incorporating the deletion of unused basic logic blocks and unused wiring into the DA process.

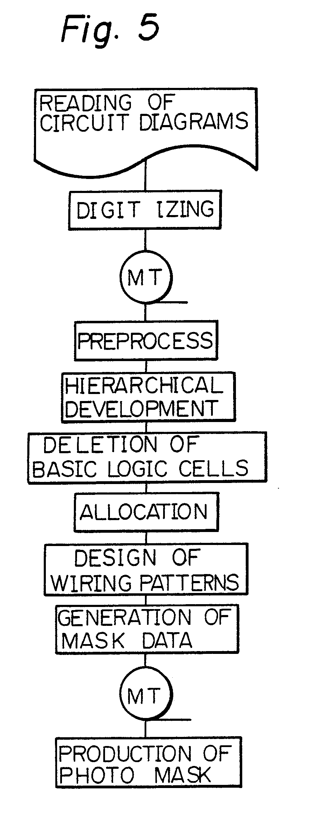

Fig. 5 shows a processing sequence for the case in which an embodiment of the method of the present invention is implemented. As shown in Fig. 5, the block circuit diagram made in the above-mentioned manner and the circuit diagrams showing the structures of the logic blocks are read in by means of, for example, an optical scanner, the contents of these circuit diagrams converted to digital codes by a digitizer, and these codes stored on a magnetic tape.

At the preprocessing stage, logic information is extracted from the digital codes stored in the magnetic tape. The logic information includes, for example, information on the kinds of basic logic blocks and the kinds of logic blocks included in the circuit diagram, as well as wiring information on terminal connections in each of the basic logic blocks and the logic blocks. It should be noted that it is possible to input logic information into a computer system directly from a keyboard by using special-purpose computer language.

Next, the logic information is developed into lower order circuit information, i.e., information having the lower hierarchy. The logic information is in this way converted into circuit information for the basic logic blocks. That is, the logic information for each of the logic blocks is replaced by circuit information at the basic logic block level, thereby representing all the logic circuits by basic logic blocks such as NAND gates, flip-flops, and the like.

Circuit information for the unused basic logic blocks and wiring is then deleted sequentially from the output terminal side back to the input terminal's side. That is, basic logic blocks whose output terminals are not connected to any other circuit are detected and deleted. Other unused basic logic blocks whose output terminals are not connected to any other circuit as a result of this deletion are also deleted. Unused basic logic blocks are sequentially deleted in a similar manner. In this way, only circuit information for basic logic blocks actually used is retained. If necessary, a detailed circuit diagram, i.e., a diagram of the total circuit structure, including only those basic logic blocks actually used is shown on a display device and stored on a magnetic tape.

Allocation of each basic logic block in the detailed circuit diagram to the basic cell elements on a gate array LSI chip, i.e., the disposition of each basic logic block, is then detetmined, and wiring to connect the basic cell elements is determined from the detailed circuit diagram information obtained by the above-mentioned process. Mask data for making mask patterns is generated and stored on a magnetic tape based on this information on the disposition and the wiring of these basic logic blocks. A mask pattern generating apparatus uses the mask data recorded on the magnetic tape to make practical mask patterns, in a known manner.

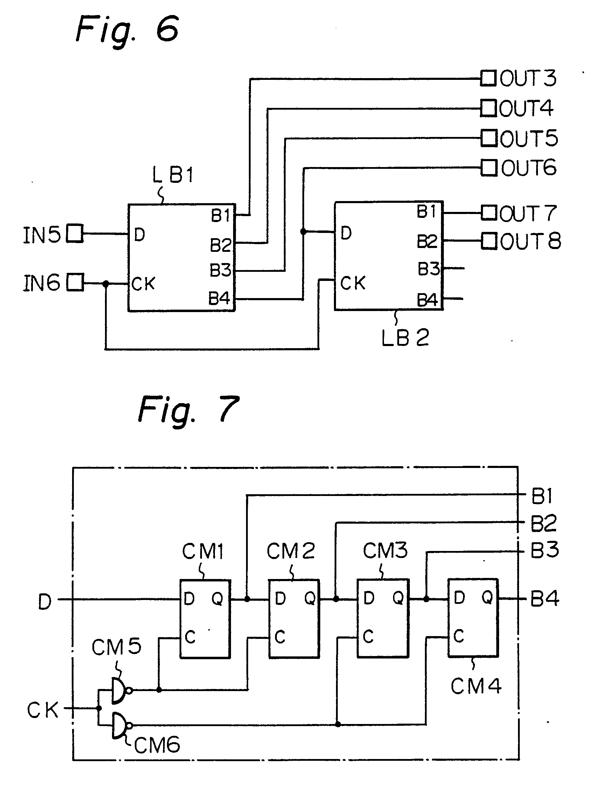

Fig. 6 shows another example of a block circuit diagram designed using logic blocks. The block circuit diagram includes two logic blocks LB1 and LB2 which construct a six stage shift register. Each of the logic blocks LB1 and LB2 is an four stage shift registerand comprises four D-type flip-flops composedof basic logic blocks CM1, and CM2, CM3 and CM4, and two inverters composed of basic logic blocks CM5 and CM6.

After the aforementioned preprocessing stage in the process of Fig. 5, the logic information for the circuits shown in Figs. 6 and 7 is obtained.

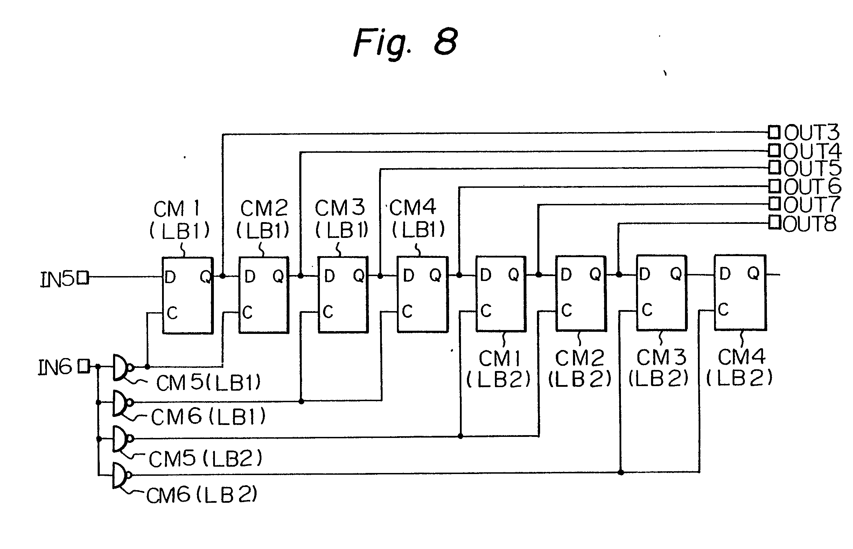

Fig. 8 shows a block circuit which is obtained after hierarchical development is effected by using the logic information for the circuits of Figs.

6 and 7. In Fig. 8, each reference symbol includes information for a logic block and a basic logic block. For example, a reference symbol CM1(LB1) means the basic logic block CM1 of the logic block LB1.

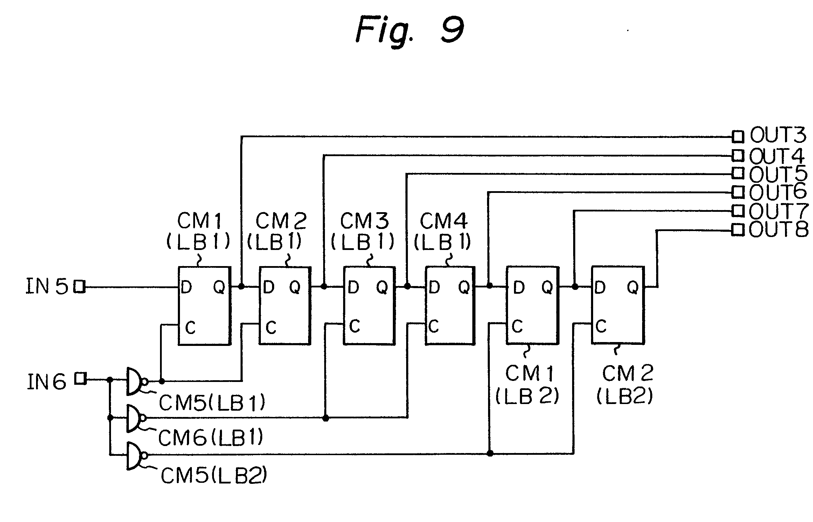

Fig. 9 shows a block circuit obtained after unused basic logic blocks and unused wiring are deleted from the circuit of Fig. 8. For example, logic blocks CM3(LB2), CM4(LB2), and CM6(LB2), and wiring connecting the output of the basic logic block CM6(LB2) to the clock inputs of the basic logic blocks CM3(LB2) and CM4(LB2), and so on is deleted. Mask patterns are formed by using the circuit information corresponding to the circuit of Fig. 9.

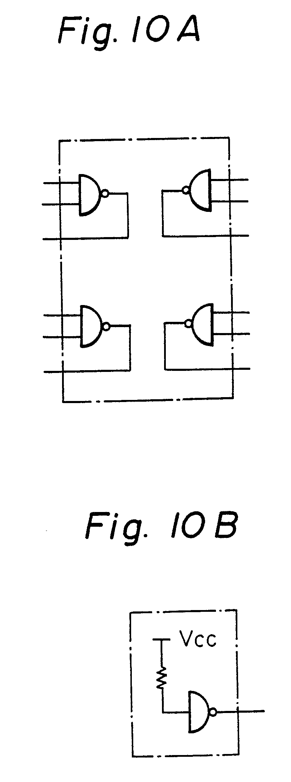

Figs. 10A and 10B show other examples of logic blocks to which the method according to the present invention is adaptable. The logic block of Fig. 10A comprises four NAND gates and has the same circuit structure as that of a standard 7400 type quad two input NAND gate IC device. According to the present invention, it is possible to include standard IC devices, such as 74 series IC devices, in a logic block family. The logic block of Fig. 10B is a stack cell which is used to output a predetermined logical level signal, such as alow level signal. The stack cell of Fig. 10B can be included in the logic block of Fig. 10A. It should be noted that, according to the present invention, if the stack cell and/or some NAND gates are not actually used in a block circuit diagram designed by a customer, they are automatically deleted. Therefore, unused logic blocks are not allocated in a chip of a gate array LSI.

As mentioned above, according to the present invention, it is possible to generate a block circuit diagram for making mask patterns by using logic blocks, and to partially use each logic block, such as to enable a great decrease in the number of kinds of logic blocks required. The capacity of the memory device for registering libraries of logic blocks can therefore be reduced, and the execution time required for computation in the design automation process decreased. According to the present invention, it is also possible to greatly simplify the manual working required to register the libraries of the logic blocks in a computer and thereby to reduce the generation of defective LSIsand the deterioration in reliability caused by manual operation.

## Claims

1. A method of manufacturing a master-slice integrated circuit device whereby a logic block including a plurality of basic logic blocks is registered in a library in a memory, a total circuit diagram is made by using at least one logic block, each of said logic blocks included in said total circuit diagram is developed by a process of hierarchical development into a plurality of basic logic blocks, then said total circuit diagram is reformed by deleting basic logic blocks whose output terminals are not used among said basic logic blocks in each of said logic blocks, deleting unused wiring and other unused basic logic blocks whose output terminals are not connected to any basic logic blocks as a result of the deletion of said basic logic blocks, and sequentially deleting unused basic logic blocks and unused wiring in the same manner, thereby retaining only those basic logic blocks that are actually used as effective basic logic blocks, the circuit patterns of said master slice integrated circuit device being produced by using the total circuit diagram thus reformed.

2. A method according to claim 1, wherein said circuit patterns of said master slice integrated circuit device are manufactured using mask data prepared from information on the allocation of the circuit elements of each basic logic block on a semiconductor chip and on the wiring between said circuit elements.

3. A method according to claim 1 or 2, wherein other logic blocks, which can be derived by deleting one or more basic logic blocks and wiring from said logic block, are not registered in said library, and wherein in the total circuit diagram, a logic function corresponding to a said other logic block is implemented by using part of the logic block which is registered in the library.

4. A method of manufacturing a master-slice integrated circuit device, comprising the steps of:

(a) storing, in a library, information defining basic logic blocks and logic blocks, each logic block being constituted by a plurality of basic logic blocks;

(b) reading, into a computer, a circuit diagram for a logic design, comprising basic logic blocks and logic blocks, and wiring connecting the basic logic blocks and logic blocks;

(c) digitising the circuit diagram to form logic information specifying the types of basic logic blocks and logic blocks used in the logic design and the wiring connecting the basic logic blocks and logic blocks;

(d) converting the logic information into circuit information at the basic logic block level, in which the logic blocks used in the logic design are replaced by their constituent basic logic blocks;

(e) processing the circuit information to delete basic logic blocks whose output terminals are unused, i.e. not connected to any other basic logic block or to an output of the logic design;

(f) processing the circuit information to delete unused wiring and basic logic blocks whose output terminals are unused as a result of a previous deletion;

(g) repeating step (f) until only those basic logic blocks which are actually used in the logic design are retained, to form detailed circuit diagram information;

(h) allocating each basic logic block in the detailed circuit diagram information, to basic cell elements of the master-slice integrated circuit device;

(i) determining wiring patterns for connecting together the basic logic blocks in the detailed circuit diagram information;

(j) generating mask data for making mask patterns corresponding to the detailed circuit diagram information; and

(k) forming the mask patterns on the master-slice integrated circuit device.

5. A method as claimed in claim 4, wherein said logic block stored in the library has associated with it one or more other logic blocks derivable from the logic block by deleting one or more basic logic blocks from the logic block, and wherein in the circuit diagram of step (b) a logic function corresponding to a said other logic block is implemented by using part of the associated stored logic block.

**Patentansprüche**

1. Verfahren zur Herstellung einer integrierten Master-Slice-Schaltungsvorrichtung, wodurch ein Logikblock, der eine Vielzahl von Basislogikblöken enthält, in einer Bibliothek in einem Speicher registriert wird, ein totales Schaltungsdiagramm unter Verwendung von wenigstens einem Logikblock erstellt wird, jeder der genannten Logikblöcke, der in dem genannten totalen Schaltungsdiagramm enthalten ist, durch einen Prozeß einer hierarchischen Entwicklung in eine Vielzahl von Basislogikblöcken entwickelt wird, dann das genannte totale Schaltungsdiagramm reformiert wird, durch Zerstören von Basislogikblöcken, deren Ausgangsanschlüsse nicht unter den genannten Basislogikblöcken in jedem der genannten Logikblöcke genutzt werden, Zerstören ungenutzter Verdrahtung und anderer ungenutzter Basisblöcke, deren Ausgangsanschlüsse nicht mit irgendeinem der Basislogikblöcke verbunden sind, als ein Ergebnis der Zerstörung der genannten Basisblöcke, und sequentielles Zerstören ungenutzter Basislogikblöcke und ungenutzter Verdrahtung in derselben Weise, wodurch lediglich jene Basislogikblöcke beibehalten werden, die tatsächlich als effektive Basislogikblöcke verwendet werden, wobei die Schaltungsmuster der genannten integrierten Master-Slice-Schaltungsvorrichtung durch Nutzung des so reformierten totalen Schaltungsdiagramms erzeugt werden.

2. Verfahren nach Anspruch 1, bei dem die genannten Schaltungsmuster der genannten integrierten Master-Slice-Schaltungsvorrichtung unter Verwendung von Maskendaten hergestellt werden, die aus Information über die Zuordnung der Schaltungselemente von jedem Basislogikblock auf einem Halbleiterchip und der Verdrahtung zwischen den genannten Schaltungselementen ermittelt wurden.

3. Verfahren nach Anspruch 1 oder 2, bei dem andere Logikblöcke, die durch Zerstören von einem oder mehreren Basislogikblöcken und Verdrahtung von dem genannten Logikblock abgeleitet werden, nicht in der genannten Bibliothek registriert werden, und bei dem in dem totalen Schaltungsdiagramm eine Logikfunktion, die dem genannten anderen Logikblock entspricht, unter Verwendung eines Teils des Logikblockes, der in der Bibliothek registriert ist, ausgeführt wird.

4. Verfahren zur Herstellung einer integrierten Master-Slice-Schaltungsvorrichtung mit den folgenden Schritten:

(a) Speichern, in einer Bilbiothek, von Information, welche Basislogikblöcke und Logikblöcke definiert, von denen jeder Logikblock aus einer Vielzahl von Basislogikblöcken gebildet ist;

· (b) Lesen, in einen Computer, eines Schaltungsdiagramms für ein Logikdesign, welches Basislogikblöcke und Logikblöcke und Verdrahtung, welche die Basislogikblöcke und die Logikblöcke verbindet, umfaßt;

(c) Digitalisieren des Schaltungsdiagramms, um logische Information zum Spezifizieren von Typen von Basislogikblöcken und Logikblöcken, zu bilden, welche in dem Logikdesign verwendet werden, und der Verdrahtung, welche die Basislogikblöcke und die Logikblöcke verbindet;

(d) Konvertieren der Logikinformation in Schaltungsinformation bei dem Basislogikblockpegel, bei welchem die Logikblöcke, die in dem Logikdesign verwendet werden, durch ihre Basislogikblockbestandteile ersetzt werden;

(e) Verarbeiten der Schaltungsinformation, um Basislogikblöcke zu zerstören, deren Ausgangsanschlüsse unbenutzt sind, d. h. nicht mit irgendeinem anderen Logikblock oder mit einem Ausgang eines Logikdesigns verbunden sind;

(f) Verarbeiten der Schaltungsinformation, um ungenutzte Verdrahtung und Basislogikblöcke zu zerstören, deren Ausgangsanschlüsse als Folge einer vorherigen Zerstörung ungenutzt sind;

(g) Wiederholen des Schrittes (f), bis lediglich jene Basislogikblöcke, die tatsächlich in dem Logikdesign verwendet werden, beibehalten sind, um detaillierte Schaltungsdiagramminformation zu bilden;

(h) Zuordnen jedes Basislogikblocks in der detaillierten Schaltungsdiagramminformation zu Basiszellelementen der integrierten Master-Slice-Schaltungsvorrichtung;

(i) Bestimmen von Verdrahtungsmustern zum Verbinden der Basislogikblöcke in der detaillierten Schaltungsdiagramminformation miteinander;

(j) Erzeugen von Maskendaten, um Maskenmuster zu machen, die der detaillierten Schaltungsdiagramminformation entsprechen; und

(k) Bilden von Maskenmustern auf der integrierten Master-Slice-Schaltungsvorrichtung.

5. Verfahren nach Anspruch 4, bei dem genannten Logikblock, der in der Bibliothek gespeichert ist, eine oder mehrere andere Logikblöcke zugeordnet sind, die von dem Logikblock durch Zerstören von einem oder mehreren Basislogikblöcken von dem Logikblock herleitbar sind, und bei dem in dem Schaltungsdiagramm des Schrittes (b) eine Logikfunktion, die dem genannten anderen Logikblock entspricht, durch Verwendung eines Teiles des zugeordneten gespeicherten Logikblockes ausgeführt wird.

## Revendications

1. Procédé de fabrication d'un dispositif en circuits intégrés par matrice standard, dans lequel un bloc logique comportant plusieurs blocs logiques de base est enregistré dans une bibliothèque dans une mémoire, un schéma d'ensemble des circuits étant réalisé en utilisant au moins un bloc logique, chacun desdits blocs logiques inclus dans ledit schéma d'ensemble de circuits étant développé par un processus de développement hiérarchique en plusieurs blocs logiques de base, le schéma d'ensemble des circuits étant refait en supprimant des blocs logiques de base dont les bornes de sortie ne sont pas utilisées parmi lesdits blocs logiques de base dans chacun desdits blocs logique, en supprimant des connexions inutilisées et autres blocs logiques de base inutilisés dont les bornes de sortie ne sont pas connectées à d'autres blocs logiques de base sous l'effet de la suppression desdits blocs logiques de base et en supprimant séquentiellement des blocs logiques de base inutilisés et des connexions inutilisées de la même manière, ne conservant ainsi que des blocs logiques de base qui sont réellement utilisés comme des blocs logiques de base effectifs, les configurations des circuits dudit dispositif en circuits intégrés à matrice standard étant produits en utilisant le schéma total des circuits ainsi refait.

2. Procédé selon la revendication 1, dans lequel lesdites configurations des circuits dudit dispositif à circuits intégrés par matrice standard sont fabriquées en utilisant des données de masques préparées à partir d'informations sur l'affectation des éléments de circuits de chaque bloc logique de base sur une pastille semi-conductrice et sur les connexions entre lesdits éléments de circuits.

3. Procédé selon la revendication 1 ou 2, dans lequel d'autres blocs logiques qui peuvent être dérivés en supprimant un ou plusieurs blocs logiques de base et de connexion depuis ledit bloc logique ne sont pas enregistrés dans ladite bibliothèque et dans lequel, dans le schéma d'ensemble des circuits, une fonction logique correspondant à l'un desdits autres blocs logiques est réalisée en utilisant une partie de bloc logique qui est enregistré dans la bibliothèque.

4. Procédé de fabrication d'un dispositif en circuits intégrés par matrice standard, consistant:

(a) à mémoriser, dans une bibliothèque, des informations définissant des blocs logiques de base et des blocs logiques, chaque bloc logique étant constitué par plusieurs blocs logiques de base,

(b) à lire dans un calculateur, un schéma pour une conception logique, comprenant des blocs logiques de base et des blocs logiques et des connexions qui connectent des blocs logiques de base et des blocs logiques,

(c) à numériser le schéma pour former des informations logiques spécifiant les types des blocs logiques de base et des blocs logiques utilisés dans la conception logique et les connexions qui relient les blocs logiques de base et les blocs logiques,

(d) à convertir les informations logiques en des informations de circuit au niveau des blocs logiques de base, dans lequel les blocs logiques utilisés dans la conception logique sont remplacés par leurs blocs logiques de base constituants,

(e) à traiter les informations de circuits pour supprimer des blocs logiques de base dont les bornes de sortie ne sont pas utilisées, c'est à dire ne sont pas connectées à un autre bloc logique de base ou une sortie de la conception logique,

(f) à traiter les informations de circuits pour supprimer des connexions inutilisées et des blocs logiques de base inutilisés dont les bornes de sortie ne sont pas utilisées sous l'effet d'une suppression précédente,

(g) à répéter la phase (f) jusqu'à ce que seuls des blocs logiques de base qui sont réellement utilisés dans la conception logique soient conservés pour former des informations de diagramme de circuits détaillés,

(h) à affecter chaque bloc logique de base dans les informations de schéma détaillé à des éléments de cellules de base du dispositif en circuits intégrés à matrice standard,

(i) à déterminer des configurations de connexions pour relier ensemble les blocs logiques de base dans les informations de schéma de circuits détaillés,

(j) à produire des données de masque pour réaliser des configurations de masque correspondant aux informations de schéma de circuits détaillés, et

(k) à former les configurations de masque du dispositif en circuits intégrés à matrice standard.

5. Procédé selon la revendication 4, dans lequel ledit bloc logique mémorisé dans la bibliothèque est associé avec un ou plusieurs autres blocs logiques pouvant étre dérivés de bloc logique en supprimant un ou plusieurs blocs logiques de base du bloc logique et dans lequel dans le schéma de circuits de la phase (b) une fonction logique correspond audit autre bloc logique est réalisée en utilisant une partie du bloc logique mémorisé associé.

## Fig. 1

IN1 — □

IN2 — □

IN3 — □

IN4 — □

MC(A)

MC(B)

G1

□ — OUT1

□ — OUT2

## Fig. 2A

i1 — □

i2 — □

G2

G5

G4

G3

G6

□ — O1

□ — O2

## Fig. 2B

i3 — □

i4 — □

G7

G9

G8

□ — O3

1

*Fig. 3*

IN 1 —□——————[MC(C)]————————□— OUT1

IN2 —□——————

IN 3 —□——————[MC(C)]

IN4 —□——————

G1 □— OUT 2

*Fig. 4*

i1 —□——[G2]——[G3]——□— O1

[G5]

i2 —□——[G4]——[G6]——□— O2

# Fig. 5

```
┌─────────────────────┐
│ READING OF          │
│ CIRCUIT DIAGRAMS    │
└─────────────────────┘
          │
┌─────────────────────┐
│   DIGIT IZING       │
└─────────────────────┘
          │
        ( MT )
          │
┌─────────────────────┐
│    PREPROCESS       │
└─────────────────────┘
┌─────────────────────┐
│ HIERARCHICAL        │
│ DEVELOPMENT         │
└─────────────────────┘
┌─────────────────────┐
│ DELETION OF         │
│ BASIC LOGIC CELLS   │
└─────────────────────┘
┌─────────────────────┐
│   ALLOCATION        │
└─────────────────────┘
┌─────────────────────┐
│ DESIGN OF           │
│ WIRING PATTERNS     │
└─────────────────────┘
┌─────────────────────┐
│ GENERATION OF       │
│ MASK DATA           │
└─────────────────────┘
          │
        ( MT )
          │
┌─────────────────────┐
│ PRODUCTION OF       │
│ PHOTO MASK          │
└─────────────────────┘
```

## *Fig. 6*

## *Fig. 7*

Fig. 8

OUT3
OUT4
OUT5
OUT6
OUT7
OUT8

CM 1 (LB1)　CM2 (LB1)　CM3 (LB1)　CM4 (LB1)

IN5

D Q | D Q | D Q | D Q | D Q | D Q | D Q | D Q
C | C | C | C | C | C | C | C

CM1 (LB2)　CM2 (LB2)　CM3 (LB2)　CM4 (LB2)

IN6

CM5(LB1)

CM6(LB1)

CM5(LB2)

CM6(LB2)

EP 0 107 393 B1

## Fig. 9

*Fig. 10 A*

*Fig. 10 B*